# EUROPEAN PATENT APPLICATION

(11) **EP 4 571 549 A1**
(43) Date of publication of application: **18.06.2025**
(21) Application number: 24218982.7
(22) Date of filing: 11.12.2024
(51) Int. Cl.: G06F 21/55, G06F 21/57, H04L 9/40

(54) **A METHOD FOR THREAT DETECTION IN A THREAT DETECTION SYSTEM AND A THREAT DETECTION SYSTEM**

(30) Priority: 11.12.2023 GB 202318846
(71) Applicant: WithSecure Corporation, 00180 Helsinki (FI)
(72) Inventor: KOMASHINSKIY, Dmitriy, 00180 HELSINKI (FI); BLOMSTEDT, Paul, 00180 HELSINKI (FI)
(74) Representative: Berggren Oy

(57) **Abstract**

A threat detection system, a server of a threat detection system and a method for threat detection in a threat detection system, which threat detection system comprises at least one endpoint (101, 205a-205h) and/or at least one server (102, 202). The method comprises utilizing by the threat detection system at least two threat detection components for detecting cyber threats, wherein the threat detection components are connected to a threat detection controller which controls the threat detection by assigning tasks and/or giving instructions to the threat detection components and by following outputs of the threat detection components, wherein the threat detection controller utilizes at least one large language model when outputting data to a threat detection component and/or when processing information received from a threat detection component.

## Description

### Technical Field

The present invention relates to a threat detection system, a server of a threat detection system and a method for threat detection in a threat detection system.

### Background

Security and threat detection systems for computers and computer networks are used to detect threats and anomalies in computers and computer networks. Examples of such are Endpoint Protection Platform (EPP), Endpoint Detection & Response (EDR) and Managed Detection and Response (MDR) products and services. An endpoint protection platform (EPP) is a solution deployed on endpoint devices to prevent file-based malware attacks and to detect malicious activity. Also, EDR systems focus on the detection and monitoring of a breach as it occurs and helps to determine how best to respond the detected breach. EDR systems also provide the investigation and remediation capabilities needed to respond to dynamic security incidents and alerts. MDR in turn is a managed cybersecurity service providing service for threat detection, response, and remediation. The growth of efficient and robust threat detection solutions has been made possible in part by the emergence of machine learning, big data and cloud computing.

EPP, EDR or other corresponding systems deploy data collectors or processing units, such as agents or sensors, on selected network endpoints, which can be any elements of IT infrastructure. Typically agents of EPP-system can focus on endpoint protection and thus on data processing while agents of EDR-system can focus on detection functions and thus on data collection. The data collectors observe activities happening at the endpoint and then send the collected data to a central, backend system, often located in the cloud. When the backend receives data, the data can be processed (e.g. aggregated and enriched) before being analyzed and scanned by the security system provider for signs of security breaches and anomalies.

Nowadays proactive and accurate detection of cyber threats requires broad adoption of specialized mechanisms responsible for carrying out different types of actions which help in recognizing threats in computers or computer networks. These actions may include for example querying reputation services and metadata lookup databases, parsing composite objects (e.g. installer packages, emails, web pages, documents), analyzing obtained contents (like executables, process dumps, texts, images), obtaining behavioral data (e.g., via emulation and sandboxing facilities).

The process of threat detection leading to decision making can be iterative and can comprise multiple steps depending on the current uncertainty and acceptable risk levels it can be continued by triggering more and more sophisticated actions. The list of actions can evolve continuously and include auxiliary mechanisms that serve tasks like image tagging, sentiment analysis, machine translation, spell checking and identifying obfuscated data.

One challenge of the prior art systems is that developing, maintaining, and keeping such a decision logic up to date is challenging and requires much work for example in form of configuring different systems to work with each other. Also, some actions may require incorporating non-trivial solutions that can't be easily formalized and, hence, usually rely on third-party services where technology dependency and privacy become a concern. The actions also need to be dispatched rationally, meaning that every given input requires a proper handling sequence depending on the available context, threat landscape and customers' preferences. Thus, heavy efforts are needed to keep the action orchestration logic in a concise and consistent state.

Thus, there is a need to achieve a reliable and easily configurable threat detection system which is also able to utilize different mechanisms and components for threat detection related tasks.

### Summary

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

According to a first aspect, the invention relates to a method, e.g. a computer implemented method, for threat detection in a threat detection system, which threat detection system comprises at least one endpoint and/or at least one server. The method comprises utilizing by the threat detection system at least two threat detection components for detecting cyber threats, wherein the threat detection components are connected to a threat detection controller which controls the threat detection by assigning tasks and/or giving instructions, e.g. iteratively, to the threat detection components and by following outputs of the threat detection components, wherein the threat detection controller utilizes at least one large language model when outputting data to a threat detection component and/or when processing information received from a threat detection component.

In one embodiment of the invention the threat detection controller is arranged to a server or a service, such as a backend service and/or a cloud service and/or to an endpoint.

In one embodiment of the invention an input for the threat detection system and/or an input for a component of a threat detection system, such as decision-making logic, analysis of executables, updates and decision on incidents, assessed reputations and/or risk scores, is received in natural language, as structure, in numbers, as categories or their combination, and the threat detection controller converts the received information by the at least one large language model to the format required by the threat detection component or the threat detection system.

In one embodiment of the invention the at least two threat detection components comprise at least one of the following: a service component, such as a parser, an antivirus engine, an EDR and/or a MDR engine, e.g. an EDR and/or a MDR rule based engine, an EDR and/or a MDR Al-based engine; an external data source, such as a domain search database, a virus database or information source; an internal data source, such as a threat intelligence information database, an incident information database, an asset information database.

In one embodiment of the invention the threat detection component and/or the task given for the threat detection component relates to machine translation, sentiment analysis, grammar checking and/or identifying synonyms and semantically similar statements.

In one embodiment of the invention decision-making logic related information, such as deep analysis of executables, updates on incidents and decision on incidents, assessed reputations and/or risk scores, is received as input to the threat detection controller.

In one embodiment of the invention the method further comprises summarizing the output from the threat detection system and/or threat detection controller, e.g. the decision and/or reasons for the decision, by the at least one large language model.

In one embodiment of the invention the at least one large language model is a generative model and/or a model for natural language processing (NLP) tasks, such as text generation, language translation, sentiment analysis, text summarization and/or question-answering.

In one embodiment of the invention the at least one endpoint collects threat detection related data from the endpoint by a security agent module installed at the endpoint and sends the collected threat detection related data to the threat detection system, e.g. a server of the threat detection system, for further analysis, wherein the threat detection controller controls analysis of the received threat detection related data.

In one embodiment of the invention the at least one threat detection component carries out actions relating to prioritizing potential treatments for an identified threat and/or security posture improvements. In one embodiment of the invention an output of the threat detection component relates to at least one of the following: identified vulnerability, identified critical asset, priority of identified vulnerability, priority of critical asses, risk values for business of the identified asset and/or vulnerability, attack path mapping, visualization and reporting artifact.

According to a second aspect, the invention relates to a server of a threat detection system, the threat detection system comprising at least one endpoint and at least one server. The server comprises at least one or more processors and is configured to utilize at least two threat detection components in detecting cyber threats. The server comprises a threat detection controller and the threat detection components are connected to the threat detection controller which is configured to control the threat detection by assigning tasks and/or giving instructions, e.g. iteratively, for the threat detection components and by following outputs of the threat detection components. The threat detection controller is configured to utilize at least one large language model when outputting data to a threat detection component and/or when processing inputs from a threat detection component.

According to a third aspect, the invention relates to a threat detection system comprising at least one endpoint and/or at least server according to the invention.

In one embodiment of the invention the threat detection system is configured to carry out a method according to any embodiment of the invention.

According to a fourth aspect, the invention relates to a computer program comprising instructions which, when executed by a computer, cause the computer to carry out a method according to the invention.

According to a fifth aspect, the invention relates to a computer-readable medium comprising the computer program according to the invention.

With the solution of the invention, it's possible to utilize at least one large language model (LLM) in the threat detection. The large language model can be used for controlling, e.g. dispatching or orchestrating, different components and mechanisms used for threat detection and/or for handling inputs and outputs of these different components and mechanisms. With the solution of the invention for example decision making logic (e.g., deep analysis of executables, updating and decision on incidents, assessing reputations and risk scores) can be written in natural language and the at least one large language model is able to translate the natural language to the different components in the correct format that the different components require. Thus, in one embodiment of the invention the at least one large language model can play a role of a scripting engine. In some embodiment for example the decision-making logic can combine strengths of existing expert mechanisms and facilities and utilize the at least one large language model in the place where it's needed.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated.

Furthermore, it is to be understood that the use of "a" or "an", i.e. a singular form, throughout this document does not exclude a plurality.

### Brief description of the drawings

The embodiments of the invention are illustrated by way of example, and not by way of limitation, in the figures of the accompanying drawings.
- Figure 1: presents schematically an example network architecture of one embodiment of the invention.
- Figure 2: presents schematically an example network architecture of one embodiment of the invention.
- Figure 3: presents schematically at least some components of the threat detection solution of one embodiment of the invention.
- Figure 4: presents an example method according to one embodiment of the invention.
- Figure 5: presents an example computing device, such as a server, according to one embodiment of the invention.

### Detailed description

A threat detection system according to one embodiment of the invention may comprise at least one endpoint and a backend system comprising at least one backend server. In this case information, e.g. threat detection related data, can be shared between the endpoints and/or between the endpoints and the backend system.

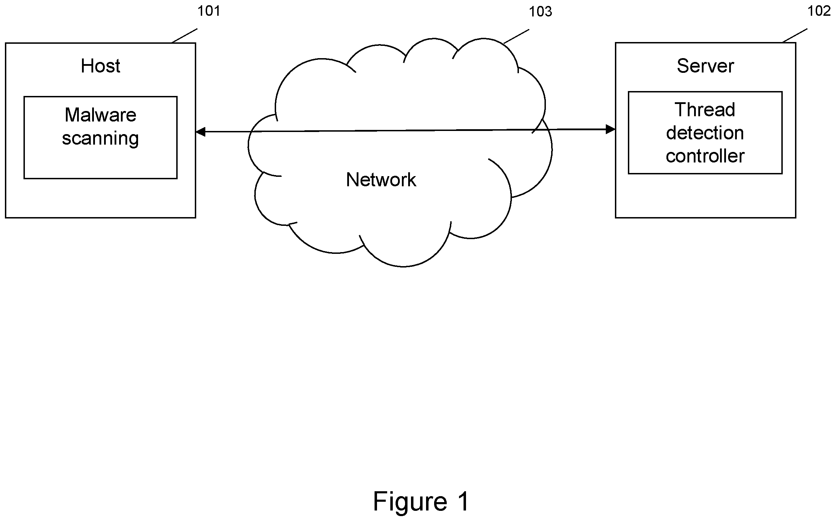

Figure 1 presents an example environment in which the solution of the invention can be used. In the solution of Figure 1 a system configuration is presented in which a local host 101 and a remote entity or server 102 are connected via a network 103. Here, the host 101 exemplifies any computer or communication system, including a single device, a network node or a combination of devices, on which malware scanning or collection of threat detection related information is to be performed. The scanning and/or analysis of the threat detection related data can be done at the host and/or at the server. For example, the host 101 may include a personal computer, a personal communication device, a network-enabled device, a client, a firewall, a mail server, a proxy server, a database server, or the like. The server 102 exemplifies any computer or communication system, including a single device, a network node or a combination of devices, on which malware scanning or threat detection data analysis can be performed for the host 101, or which can provide data for the host 101 required to carry out the malware scanning or threat detection related analysis at the host, such as risk rating and/or reputation data. For example, the server 102 may include a security entity or a backend entity of a security provider, or the like, and the server 102 may be realized in a cloud implementation or the like.

According to exemplifying embodiments of the invention, malware scanning and/or threat detection data analysis at the host 101 and/or by the server 102 can be realized using a malware analysis environment, such as a virtual machine or emulator environment, arranged at the host and/ or at the server. For example, a malware scanning agent or sensor, such as e.g. an anti-virus software can be installed/arranged at the host 101 to be used for malware scanning and/or threat detection data analysis. In one embodiment of the invention a sensor or agent at the computer is used to allow to intercept a file, a system configuration value and/or network operations called by the application. The sensor can be used to observe operation of the device, such as a computer, and information collected by the sensor can be used to detect malicious behavior of an application, a file and/or a process.

In one embodiment of the invention the malware scanning environment, service and/or software can detect starting and closing of applications, all unusual processes and attach monitoring to the required applications and processes. Also, when the services are started early, the service is able to detect and follow most of user's application. In one embodiment of the invention, when the malware scanning software or service is started up, it can perform running application inventory.

The network 103 exemplifies any computer or communication network, including e.g. a (wired or wireless) local area network like LAN, WLAN, Ethernet, or the like, a (wired or wireless) wide area network like WiMAX, GSM, UMTS, LTE, or the like, and so on. Hence, the host 101 and the server 102 can but do not need to be located at different locations. For example, the network 103 may be any kind of TCP/IP-based network. Insofar, communication between the host 101 and the server 102 over the network 103 can be realized using for example any standard or proprietary protocol carried over TCP/IP, and in such protocol the malware scanning agent at the host 101 and the malware analysis sandbox or application at the server 102 can be represented on/as the application layer.

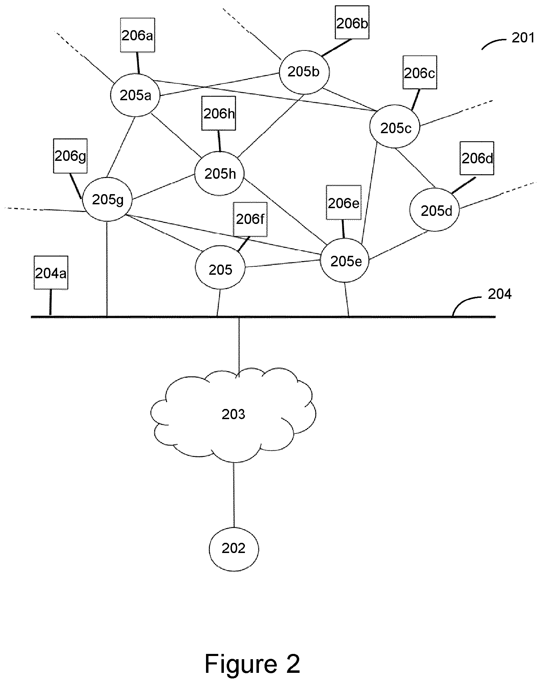

Figure 2 presents schematically also an example network architecture of one embodiment of the invention in which the solution of the invention can be used. In Figure 2 a part of a first local computer network 201 is schematically illustrated into which a computer system, for example an EPP or an EDR system, has been installed. Also, any other computer system that is able to implement the embodiments of the invention can be used instead or in addition to the EPP or EDR system used in this example. The first local computer network is connected to a security service network, in one embodiment a security backend system or server 202, through a network 203. The network can be similar as the network 103 in Figure 1. The backend system or server 202 can be similar as the server 102 of Figure 1. The backend system or server 202 can form a node on the security service computer network relative to the first local computer network. The security service computer network can be managed by a threat detection system provider and may be separated from the network 203 by a gateway or other interface (not shown) or other network elements appropriate for the backend 202. The first local computer network 201 may also be separated from the network 203 by a gateway 204 or other interface. Other network structures are also possible. In one embodiment of the invention the server can comprise a threat detection controller.

The first local computer network 201 may be formed of a plurality of interconnected network nodes 205a - 205h, each representing an element in the first local computer network 201 such as a computer, smartphone, tablet, laptop, or other piece of network enabled hardware. In one embodiment of the invention the node is any device on the network but not a gateway. Each network node 205a - 205h shown in the first local computer network can also represent an endpoint, e.g. an EDR endpoint or EPP endpoint, onto which a malware scanning agent or sensor security agent module 206a - 206h, that may include a data collector or sensor, is installed. The network nodes 205a - 205h can be similar as the local host 101 of Figure 1 and the malware scanning agent or sensor can correspond the agent presented in relation to Figure 1. The malware scanning agent or sensor may also be installed in some embodiments of the invention on any other element of the computer network, such as on the gateway or other interface. In the example of Figure 2 a security agent module 204a has been installed on the gateway 204. The malware scanning agents or sensors, 206a - 206h, 204a collect various types of data at the nodes 205a - 205h or gateway 204 including, for example, program or file hashes, files stored at the nodes 205a - 205h, logs of network traffic, process logs, binaries or files carved from memory (e.g. DLL, EXE, or memory forensics artefacts), and/or logs from monitoring actions executed by programs or scripts running on the nodes 205a - 205h or gateway 204 (e.g. TCP dumps). The data collected may be stored in a database or similar model for information storage for further use and/or sent to for further analysis. Any kind of threat detection models may further be constructed at the backend/server 202, and/or at a second server and be stored in the database. The nodes 205a - 205h and the server 202 typically comprise a hard drive, a processor, and RAM.

Any type of data which can assist in detecting and monitoring a security threat, such as a security breach or intrusion into the system, may be collected by the malware scanning agents or sensors 206a - 206h, 204a during their lifecycle and that the types of data which are observed and collected may be set according to rules defined by the threat detection system provider upon installation of the threat detection system and/or when distributing components of a threat detection model. In an embodiment, a suspicious or malicious event among the monitored events may be detected by one or more detection mechanisms used. In an embodiment, the detection mechanisms used to detect the suspicious or malicious event may comprise using a machine learning model, a scanning engine, a heuristic rule, a statistical anomaly detection, a fuzzy logic-based model, predetermined rules.

In an embodiment of the present invention, at least part of the malware scanning agents or sensors 206a - 206h may also have capabilities to make decisions on the types of data observed and collected themselves. For example, the malware scanning agents or sensors 206a - 206h, 204a may collect data about the behavior of programs running on an endpoint and can observe when new programs are started. Where suitable resources are available, the collected data may be stored permanently or temporarily by the malware scanning agents or sensors 206a - 206h, 204a at their respective network nodes or at a suitable storage location on the first local computer network 201 and/or sent further.

The malware scanning agents or sensors 206a - 206h, 204a are set up such that they send information such as the data they have collected or send and receive instructions to/from the threat detection system backend 202 through the network 203, such as internet. This allows the threat detection system provider to remotely manage the system without having to maintain a constant human presence at the organization which administers the first local computer network 201.

In one embodiment of the invention, the malware scanning agents or sensors 206a - 206h, 204a can also be configured to establish an internal network, e.g. an internal swarm intelligence network, that comprises the malware scanning agents or sensors of the plurality of interconnected network nodes 205a - 205h of the local computer network 201. As the malware scanning agents or sensors 206a - 206h, 204a collect data related to the respective network nodes 205a - 205h of each malware scanning agent or sensor 206a - 206h, 204a, they are further configured to share information that is based on the collected data in the established internal network. In one embodiment a swarm intelligence network is comprised of multiple semi-independent security nodes (security agent modules) which are capable of functioning on their own as well. Thus, the numbers of instances in a swarm intelligence network may well vary. There may also be more than one connected swarm intelligence networks in one local computer network, which collaborate with one another.

The malware scanning agents or sensors 206a - 206h, 204a and/or the backend system can be further configured to use the collected data and information received from the internal network for generating and adapting models related to the respective network node 205a - 205h and/or its users.

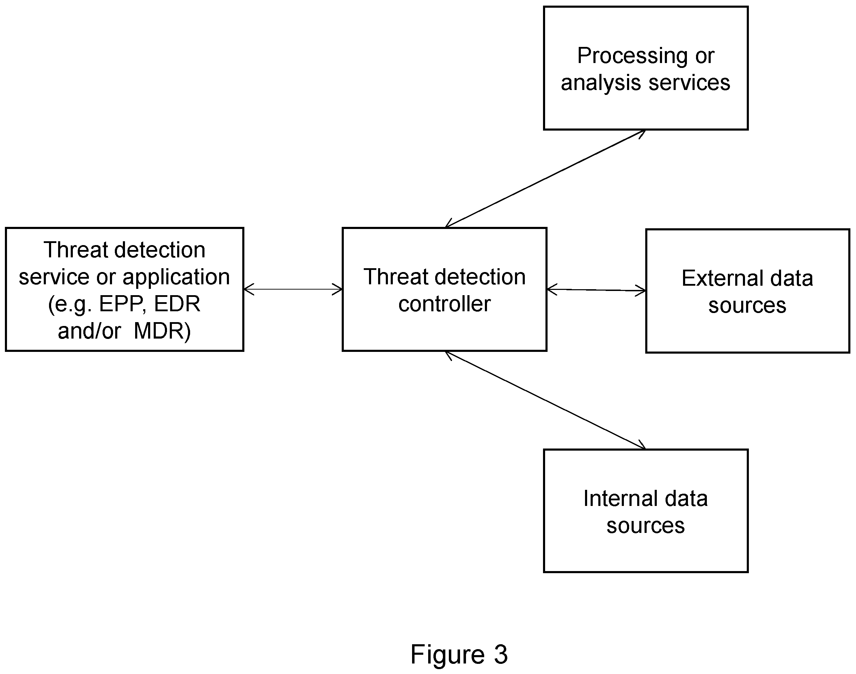

In the solution of the invention the threat detection system utilizes at least two threat detection components for detecting cyber threats or assisting in detection of cyber threats. The threat detection components are connected to a threat detection controller which controls the threat detection by assigning tasks and/or giving instructions to the threat detection components and by following outputs of the threat detection components. The process can be iterative, e.g. so that tasks are assigned and/or instructions are given to the threat detection components so long that a certain high level task is completed or that a predefined certainty level is achieved. An example of the components and their interoperation with threat detection controller is presented in Figure 3. Threat detection components can comprise for example processing or analysis services, external data sources and/or internal data sources. Processing or analysis services can comprise at least one of the following: static parsers, dynamic parsers, antivirus engines, EDR/MDR rule engines, EDR/MDR Al-based engines. External data sources can comprise at least one of the following: a domain search database, a virus database, a virus information source. Internal data sources can comprise at least one of the following: a threat intelligence information source, an incident information source, an asset information source. The threat detection components may comprise (in addition to or instead of the earlier components) at least one of the following components: a data source, a data collection agent, a data aggregation and normalization component: a data storage, an analysis engine, alerting and notification component, user interface component, reporting and logging component, an incident response tool, an integration tool, a machine learning algorithm, and an Al-algorithm, a rule engine, a scalability and/or redundancy unit, a threat intelligence feed.

In one embodiment of the invention the threat detection controller can be arranged to a server or a service, such as a backend service and/or a cloud service. In one embodiment the threat detection controller can be arranged to an endpoint or a host.

The threat detection controller can manage a threat detection process of a threat detection system, e.g. by instructing different threat detection components to perform tasks for the threat detection system. The threat detection controller can process and provide threat detection related tasks for the threat detection component with the at least one large language model and/or process data given as input for the component with the at least one large language model. The components can be specialized mechanisms responsible for carrying out different types of actions including (but not limited to): querying reputation services and metadata lookup databases, parsing composite objects (e.g., installer packages, emails, web pages, documents), analyzing obtained contents (like executables, process dumps, texts, images), obtaining behavioral data (e.g., via emulation and sandboxing facilities) and deciding on the collected facts, enriching awareness summary by threat landscape information, image tagging, sentiment analysis, machine translation, spell checking and identifying obfuscated data summarizing results of the analysis. The components can for example serve specialized, well formulated tasks, e.g. in cases where the use of a large language model is not feasible.

Large language models (LLMs), which are utilized in the solution of the invention, are typically based on a transformer architecture, though other architectures, such as recursive neural networks, are also possible. LLMs belong to a broader class of models referred to as foundation models. These models can be trained on broad data at scale and can be adaptable to a wide range of downstream tasks. LLMs can be trained to predict the next word or token in a sequence based on the preceding context, effectively generating text that follows the patterns and structures of natural language. While LLMs can be specialized for text generation and NLP tasks, they can share the underlying generative modelling principles with other generative models that create different types of data, such as images (e.g., diffusion models or Generative Adversarial Networks) or audio (e.g., WaveGANs).

Large language models can demonstrate strong abilities to comprehend natural language and tackle complex tasks using text generation. They can execute for example few-shot tasks using in-context learning. E.g. if a model is given a set of instructions or task demonstrations in natural language, it is able to produce the expected outcome for test instances by completing the word sequence in the input text. This can be done without the need for additional training or gradient updates. Large language models can also exhibit capabilities beyond natural language processing such as understanding programming languages.

One of the major advantages of large language models is their flexibility of inputs and capacity for input adaptability. This means these models are not confined predetermined types of inputs. Large language models can process a varied array of inputs, accommodating structured data like tables, unstructured data like text or images, and even abstract data constructs such as graphs. Furthermore, large language models offer considerable adaptability in terms of outputs. The models can produce diverse output formats, ranging from simplistic numerical values to text summaries, classification results, or various types of data structures. The flexibility in interpreting instructions given in a natural language makes it easy for cyber security analysts to focus on the key area of their expertise and responsibilities (per se, detection rules and definitions of expected outputs can be expressed in natural language).

Another advantage lies in the interpretability of large language models. They can provide results accompanied by rational explanations, which aids users in understanding how the model reached its conclusion. This is beneficial for situations where transparent decision-making is essential. Thus, the final outputs and reasoning chains can be summarized to make the decisions interpretable for customers of the cyber security services.

The large language models have also an ability to handle tasks which are often challenging to express in traditional coding languages. They demonstrate proficiency in pattern recognition and inferential assignments, adept at adjusting to variations and learning from prior data. Large language models possess intrinsic properties to support various use cases related to dealing with natural language like machine translation, sentiment analysis, grammar checking, identifying synonyms and semantically similar statements and so forth. Such use cases align with auxiliary actions of the detection logic (for example, spam detection logic can in one embodiment rely on language agnostic analysis that needs text translation, summarization and sentiment analysis facilities).

In one embodiment of the invention the at least one large language model is a generative model and/or a model for natural language processing (NLP) tasks, such as text generation, language translation, sentiment analysis, text summarization and/or question-answering.

In one embodiment of the invention an input for the threat detection system and/or an input for a component of a threat detection system, such as decision-making logic, analysis of executables, updates and decision on incidents, assessed reputations and/or risk scores, is received in natural language, as structures, as numbers, as categories with semantics, e.g. defined in natural language, and the threat detection controller converts the received information by the at least one large language model to the format required by the threat detection component or the threat detection system.

With the solution of the invention for example decision making logic (e.g., deep analysis of executables, updating and decision on incidents, assessing reputations and risk scores) can be written in natural language and the at least one large language model is able to translate the natural language to the different components in the correct format what the different components require. Thus, in one embodiment of the invention the at least one large language model can play a role of a scripting engine. In some embodiment for example the decision-making logic can combine strengths of existing expert mechanisms and facilities and utilize the at least one large language model in the place where it's needed.

In one embodiment of the invention decision-making logic related information, such as deep analysis of executables, updates on incidents and decision on incidents, assessed reputations and/or risk scores, is received as input to the threat detection controller.

The solution of the invention can be utilized for example in end point protection (EPP) systems. In one embodiment of the invention the hosts or computers can be protected by a threat detection system, such as an end point protection (EPP) or an EDR system. With the solution of the invention the system can comprise endpoint-side security controls which make decisions both locally and in a decentralized fashion, e.g. so that some functional elements, such as facilitating attack detection processes, are hosted remotely. The local decision-making process can rely on specific and simple (and hence often false negative-prone) security controls aiming on prompt and reliable prevention of known attacks and their variants. In uncertain situations, ambiguous objects, such as previously unseen, untrusted executables and contexts of their appearances, are analysed by remote services which can offer broader and more complex detection analysis tools than the tools on the local hosts or endpoints. The remote services can for example utilize machine learning models that scrutinize the objects via deep static and dynamic inspection. In one embodiment of the invention the threat detection controller (arranged e.g. to the server and backend side) can control this threat detection process and utilize at least one large language model when outputting data to these threat detection components and/or when processing information received from these threat detection components in analysis of the ambiguous objects.

The solution of the invention can be utilized for example in EDR- or MDR-systems. In EDR/MDR-systems the EDR/MDR-agents consume data from EDR/MDR-sensor components, perform initial analysis to determine whether a given activity (e.g. a series of events) matches with an initial definition of malicious (e.g. suspicious, informative) behaviour and, if so, forwards the information to the EDR/MDR-backend. This information can be collected by an agent component to provide context information so that an informed decision can be made regarding actions to be taken. EDR/MDR-backend can further analyse the information received from the agents deployed in an environment. EDR/MDR-sensors can work passively by intercepting data flowing through the system processes and as the sensors often need to sit inline of the processes, they must work fast. EDR/MDR-backend passes the data to its decision logic using various methods, e.g. heuristics or rules databases, to ascertain whether the activity is benign, meets its threshold for being logged, highlighted as suspicious, malicious, etc.

Creating and maintaining the logic of the EDR/MDR-system must be considered carefully as it affects a substantial number of organizations. Usually, the challenge is addressed by tailoring decision routines to the needs of separate environments, e.g. organizations. Yet another noteworthy trade-off that needs to be considered is that an agent-side logic may allow the EDR/MDR to take immediate preventive action but usually the agent-side logic does not comprise an ability to analyse complex situations. The alternative backend side detection can support the analysis of complex situations but at the cost of introducing time delays. In one embodiment of the invention the threat detection controller (arranged to the server and backend side) can control this EDR/MDR-threat detection process and utilize at least one large language model when outputting data to these threat detection components of the backend and/or when processing information received from these threat detection components of the backend and/or connected to the backend.

The solution of the invention can be utilized for example in exposure management in which the exposure of a resource is determined. In exposure management a stream of raw heterogeneous data collected from multiple sources can be processed for shaping and maintaining asset inventories and further analysed for addressing the awareness aspect e.g. via collecting asset inventory variations and general properties of assets, shaping their vulnerability scopes and postures, scoring reputations of for example public assets, supply chain providers, Al providers, etc. The awareness summary can, for example, go through threat landscape enrichment for assessing readiness via dynamic risk scoring, prioritizing risk remediation activities for per-asset and combined planes. The number of the final outputs exposure management controls and produces is expected to be moderate, e.g. risk remediation priorities per an asset, combined asset risk remediation priority and dynamic risk score. In one embodiment of the invention the threat detection controller (arranged e.g. to the server and backend side) can control this exposure analysis process and utilize at least one large language model when outputting data to these components and/or when processing information received from these components. The at least one large language model can be utilized also when enriching awareness summary by threat landscape information.

In one embodiment of the invention the at least one threat detection component carries out actions relating to prioritizing potential treatments for an identified threat and/or security posture improvements. In one embodiment of the invention an output of the threat detection component relates to at least one of the following: identified vulnerability, identified critical asset, priority of identified vulnerability, priority of critical asses, risk values for business of the identified asset and/or vulnerability, attack path mapping, visualization and reporting artifact.

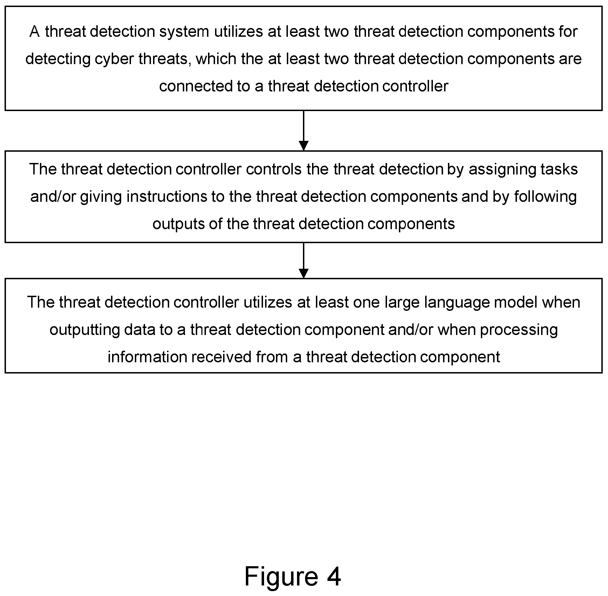

Figure 4 presents an example method according to one embodiment of the invention. In the example method the threat detection system utilizes at least two threat detection components for detecting cyber threats, wherein the threat detection components are connected to a threat detection controller. The threat detection controller controls the threat detection by assigning tasks and/or giving instructions to the threat detection components and by following outputs of the threat detection components. The threat detection controller utilizes at least one large language model when outputting data to a threat detection component and/or when processing information received from a threat detection component.

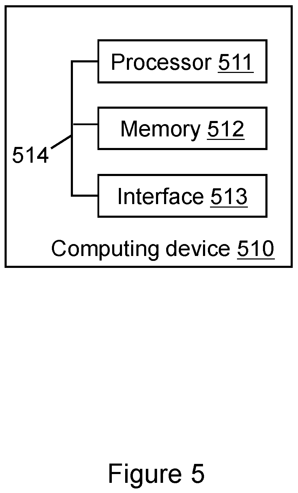

Figure 5 presents an example computing device, such as a host, an endpoint and/or a server, according to one embodiment of the invention. The computing device 510 may, for example, represent a local entity or host 1 in Figure 1, or may represent a remote entity or server 2 in Figure 1. The computing device 510 may be configured to perform a procedure and/or exhibit a functionality as described in any one of Figures 1 to 4.

The computing device may comprise at least one processor 511 and at least one memory 512 (and possibly also at least one interface 513), which may be operationally connected or coupled, for example by a bus 514 or the like, respectively. The processor 511 of the computing device 510 is configured to read and execute computer program code stored in the memory 512. The processor may be represented by a CPU (Central Processing Unit), a MPU (Micro Processor Unit), etc., or a combination thereof. The memory 512 of the computing device 510 is configured to store computer program code, such as respective programs, computer/processor-executable instructions, macros or applets, etc. or parts of them. Such computer program code, when executed by the processor 511, enables the computing device 510 to operate in accordance with exemplifying embodiments of the present invention. The memory 512 may be represented by a RAM (Random Access Memory), a ROM (Read Only Memory), a hard disk, a secondary storage device, etc., or a combination of two or more of these. The interface 513 of the computing device 510 is configured to interface with another computing device and/or the user of the computing device 510. That is, the interface 513 may represent a communication interface (including e.g. a modem, an antenna, a transmitter, a receiver, a transceiver, or the like) and/or a user interface (such as a display, touch screen, keyboard, mouse, signal light, loudspeaker, or the like).

According to exemplifying embodiments of the present invention, the electronic file to be analyzed for malware can be any electronic file, particularly encompassing any electronic file including a runnable/executable part, such as any kind of application file. Insofar, exemplifying embodiments of the present invention are applicable to any such electronic file, including for example a file of an Android Application Package (APK), a Portable Executable (PE), a Microsoft Windows Installer (MSI) or any other format capable of distributing and/or installing application software or middleware on a computer.

The data collected with the solution of the invention may be stored in a database or similar model for information storage for further use.

In an embodiment, further actions may be taken to secure the computer or the computer network when a malicious file, application or activity has been detected. Also, actions by changing the settings of the computers or other network nodes can be done. Changing the settings may include, for example, one or more nodes (which may be computers or other devices) being prevented from being switched off in order to preserve information in RAM, a firewall may be switched on at one or more nodes to cut off the attacker immediately, network connectivity of one or more of the network nodes may be slowed down or blocked, suspicious files may be removed or placed into quarantine, logs may be collected from network nodes, sets of command may be executed on network nodes, users of the one or more nodes may be warned that a threat or anomaly has been detected and that their workstation is under investigation, and/or a system update or software patch may be sent from the security backend to the nodes. In one embodiment of the invention one or more of these actions may be initiated automatically.

The threat detection system of the invention can be in one embodiment be a large language model (LLM) agent. The large language model agent can be an artificial intelligence system that utilizes a large language model (LLM) as its core computational engine to exhibit capabilities beyond text generation, comprising e.g. conducting conversations, completing tasks, reasoning, and can demonstrate autonomous behavior.

Although the invention has been described in terms of preferred embodiments as set forth above, it should be understood that these embodiments are illustrative only and that the claims are not limited to those embodiments. Those skilled in the art will be able to make modifications and alternatives in view of the disclosure which are contemplated as falling within the scope of the appended claims. Each feature disclosed or illustrated in the present specification may be incorporated in the invention, whether alone or in any appropriate combination with any other feature disclosed or illustrated herein. Lists and groups of examples provided in the description given above are not exhaustive unless otherwise explicitly stated.

## Claims

1. A method for threat detection in a threat detection system, which threat detection system comprises at least one endpoint (101, 205a-205h) and/or at least one server (102, 202), wherein the method comprises:
- utilizing by the threat detection system at least two threat detection components for detecting cyber threats,
- wherein the threat detection components are connected to a threat detection controller which controls the threat detection by assigning tasks and/or giving instructions to the threat detection components and by following outputs of the threat detection components,
- wherein the threat detection controller utilizes at least one large language model when outputting data to a threat detection component and/or when processing information received from a threat detection component.

2. A method according to claim 1, wherein the threat detection controller is arranged to a server (102, 202) or a service, such as a backend service (202) and/or a cloud service and/or to an endpoint (101, 205a-205h).

3. A method according to claim 1 and 2, wherein an input for the threat detection system and/or an input for a component of a threat detection system, such as decision-making logic, analysis of executables, updates and decision on incidents, assessed reputations and/or risk scores, is received in natural language, as structure, in numbers, as categories or their combination, and the threat detection controller converts the received information by the at least one large language model to the format required by the threat detection component or the threat detection system.

4. A method according to any previous claim, wherein the at least two threat detection components comprise at least one of the following:
a service component, such as a parser, an antivirus engine, an EDR and/or a MDR engine, e.g. an EDR and/or a MDR rule based engine, an EDR and/or a MDR Al-based engine,
an external data source, such as a domain search database, a virus database or information source,
an internal data source, such as a threat intelligence information database, an incident information database, an asset information database.

5. A method according to any previous claim, wherein the threat detection component and/or the task given for the threat detection component relates to machine translation, sentiment analysis, grammar checking and/or identifying synonyms and semantically similar statements.

6. A method according to any previous claim, wherein decision-making logic related information, such as deep analysis of executables, updates on incidents and decision on incidents, assessed reputations and/or risk scores, is received as input to the threat detection controller.

7. A method according to any previous claim, wherein the method further comprises summarizing the output from the threat detection system and/or threat detection controller, e.g. the decision and/or reasons for the decision, by the at least one large language model.

8. A method according to any previous claim, wherein the at least one large language model is a generative model and/or a model for natural language processing (NLP) tasks, such as text generation, language translation, sentiment analysis, text summarization and/or question-answering.

9. A method according to any previous claim, wherein the at least one endpoint (101, 205a-205h) collects threat detection related data from the endpoint by a security agent module installed at the endpoint (101, 205a-205h) and sends the collected threat detection related data to the threat detection system, e.g. a server (102, 202) of the threat detection system, for further analysis, wherein the threat detection controller controls analysis of the received threat detection related data.

10. A method according to any previous claim, wherein the at least one threat detection component carries out actions relating to prioritizing potential treatments for an identified threat and/or security posture improvements, and/or
wherein an output of the threat detection component relates to at least one of the following: identified vulnerability, identified critical asset, priority of identified vulnerability, priority of critical asses, risk values for business of the identified asset and/or vulnerability, attack path mapping, visualization and reporting artifact.

11. A server of a threat detection system, the threat detection system comprising at least one endpoint (101, 205a-205h) and at least one server (102, 202), wherein
the server (102, 202) comprises at least one or more processors and is configured to:
- utilize at least two threat detection components in detecting cyber threats,
- wherein the server (102, 202) comprises a threat detection controller and the threat detection components are connected to the threat detection controller which is configured to control the threat detection by assigning tasks and/or giving instructions for the threat detection components and by following outputs of the threat detection components,
- wherein the threat detection controller is configured to utilize at least one large language model when outputting data to a threat detection component and/or when processing inputs from a threat detection component.

12. A threat detection system comprising:
at least one endpoint (101, 205a-205h), and/or
at least one server, wherein the server is a server (102, 202) according to claim 11.

13. A threat detection system wherein the threat detection system is configured to carry out a method according to any claim 2-10.

14. A computer program comprising instructions which, when executed by a computer, cause the computer to carry out the method according to any of claims 1 - 10.

15. A computer-readable medium comprising the computer program according to claim 14.
